# EUROPEAN PATENT SPECIFICATION

(11) **EP 4 256 756 B1**
(45) Date of publication and mention of the grant of the patent: **07.10.2026**
(21) Application number: 21838976.5
(22) Date of filing: 06.12.2021
(51) Int. Cl.: H04L 12/14, H04M 17/00, H04W 4/24, H04M 15/00, H04M 17/02

(54) **METHOD AND APPARATUS FOR PROVIDING A PRE-PAID SERVICE IN A CELLULAR COMMUNICATION NETWORK**
VERFAHREN UND VORRICHTUNG ZUR BEREITSTELLUNG EINES VORAUSBEZAHLTEN DIENSTES IN EINEM ZELLULÄREN KOMMUNIKATIONSNETZ
PROCÉDÉ ET APPAREIL DESTINÉS À FOURNIR UN SERVICE PRÉ-PAYÉ DANS UN RÉSEAU DE COMMUNICATION CELLULAIRE

(30) Priority: 07.12.2020 WO PCT/CN2020/134343
(43) Date of publication of application: 11.10.2023
(73) Proprietor: Telefonaktiebolaget LM Ericsson (publ), 164 83 Stockholm (SE)
(72) Inventor: CHEN, Ping, Shanghai 201316 (CN); LIU, Qiang, Shanghai 200335 (CN); VAZQUEZ, Emiliano Merino, 28916 Leganes, Madrid (ES); ALONSO, Susana Fernandez, 28009, Madrid (ES); TAO, Jingrui, Guangzhou, Guangdong 510630 (CN)
(74) Representative: Ericsson
(86) International application number: PCT/CN2021/135600
(87) International publication number: WO 2022/121815

(56) References cited:
- EP-A1- 2 343 853
- WO-A1-2020/216125
- "3rd Generation Partnership Project; Technical Specification Group Core Network and Terminals; Study on CT WG3 Aspects of 5G System - Phase 1; Stage 3 (Release 15)", 3GPP STANDARD ; TECHNICAL REPORT ; 3GPP TR 29.890, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V1.0.1, 4 September 2017 (2017-09-04), pages 1 - 109, XP051336827
- "3rd Generation Partnership Project; Technical Specification Group Services and System Aspects; Policy and Charging Control Framework for the 5G System; Stage 2 (Release 15)", 29 January 2018 (2018-01-29), XP051384055, Retrieved from the Internet <URL:http://www.3gpp.org/ftp/tsg%5Fct/WG4%5Fprotocollars%5Fex%2DCN4/TSGCT4%5F82%5FGothenburg/Docs/> [retrieved on 20180129]
- NTT DOCOMO ET AL: "Addition of PDU Session type IPv4v6", vol. SA WG2, no. Montreal, Canada; 20180226 - 20180302, 19 March 2018 (2018-03-19), XP051411327, Retrieved from the Internet <URL:http://www.3gpp.org/ftp/Meetings%5F3GPP%5FSYNC/SA/Docs/> [retrieved on 20180319]

## Description

### TECHNICAL FIELD

The present disclosure generally relates to wireless communication technology. More particularly, the present disclosure relates to a method for providing a pre-paid service in a cellular communication network. The present disclosure also relates to apparatus adapted for the same purpose.

### BACKGROUND

3GPP network allows Application Functions (e.g. for untrusted AFs via an Exposure Function like SCEF/NEF) to receive notifications on bearer level events (e.g. release of bearer) when the AF creates an AF session with a specific quality of service (QoS) level.

An AF can specify a required QoS reference to be applied to a given UE for a given IP flow, e.g. AF from Sony may indicate (via NEF/SCEF) that a given UE using *Sony Play Store Online* is allocated to a QoS for IP flow. To complete the configuration on QoS, the 3GPP network shall notify Sony's AF about the bearer for the flow being released, or the IP connectivity (PDN connection) for the UE being dropped.

In other words, an AF can define a specific QoS level for a given IP flow to/from one UE and receive events associated with the bearer on which the IP flow is installed.

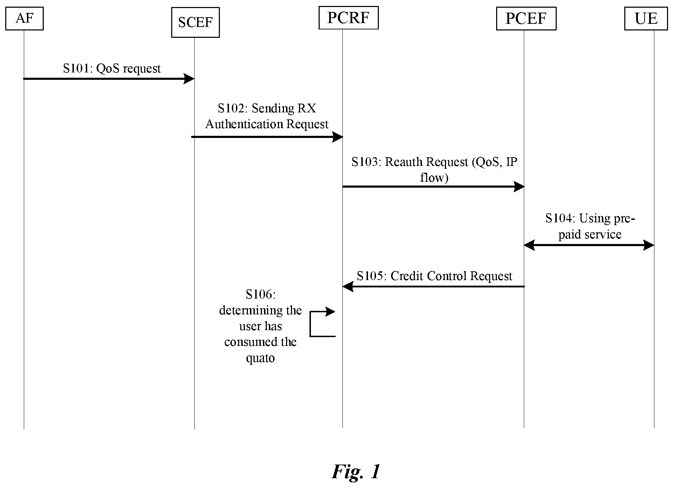

Figure 1 schematically illustrates a typical QoS control procedure in a scenario where a pre-paid service is provided by an AF.

As shown in Fig. 1, the procedure comprises the following steps:
Step S101: AF node initiates an AF session with a QoS request includes a UE IP address, an IP flow ID, and a QoS reference applied to the UE IP address and the IP flow.
Step S102: In response to the QoS request, SCEF node initiates an Rx session with PCRF/PCF node by sending a Rx Authentication Request or creates a resource for the Npcf_PolicyAuthorization service in the PCF Network Function including App ID mapped from the QoS reference received from AF node, the UE IP address and the IP flow ID.
Step S103: In response to the Rx Authentication Request/Npcf_PolicyAuthorization_Create service operation, PCRF/PCF node configures PCC rules to map the APP ID into a specific QoS level and sends to PCEF/SMF node a Reauthentication Request/Npcf_SMPolicyControl_Notify including the App ID, UE IP and IP flow.
Step S104: When using the pre-paid service, data volume consumed by UE is counted by PCEF (4G) or UPF (5G) node.
Step S105: PCEF/SMF node sends to PCRF/PCF node a Credit Control Request/Npcf_PolicySession_Update to report data volume consumed.
Step S106: PCRF/PCF node determines whether a user subscribing to the pre-paid service has fulfilled the quota (e.g., 10 Gb) on the basis of the Credit Control Request from PCEF/SMFnode.

Since the event that the user has fulfilled the quota is unknown for AF node, the QoS level for the user cannot be adjusted in time.

3GPP TR 29.890 v1.0.1 is a Technical Report studying the CT WG3 Aspects of the 5G System. It describes the Nsmf_EventExposure service, which allows other network functions to subscribe and unsubscribe for events on a PDU session, and to be notified of events, such as Out of credit.

EP 2343853 discloses a method for dynamically controlling the quality of services attributed for a communication session of a UE, based on the detection of an event on the account of the user which, it is decided, shall indue a change of parameters of the quality of service

### SUMMARY OF THE INVENTION

It is desirable to enable AF to make an appropriate response when a subscriber has run out resources. For example, the response may include notifying the subscriber of subscribing to the resources and/or downgrading the QoS level for him.

In the above procedure as described with reference to Fig. 1, AF node needs to send a QoS request for each and every user. Since very often most subscribers are applicable to the same QoS control policy (e.g., the same QoS level is applied to any IP flow from a large amount of UEs towards any destination IP), it is inefficient to separately send the request. Moreover, under the standard procedure, PCRF/PCF node identifies a data connection (IP connectivity, or PDN connection in EPC, or PDU session in 5GC) based on the IP address of each UE. Thus, AF node shall know in advance the IP address allocated to the UE so that the QoS request can be addressed to SCEF/NEF node and PCRF/PCF node.

The present disclosure describes efficient solutions to handle the above issues. In one or more embodiments of the present disclosure, by means of exposing an existing Charging Application Event to AF (e.g., Out_of_Credit), AF node can subscribe to this event when designating a QoS level to a session/IP flow in a QoS request. Moreover, in the QoS request sent to SCEF/NEF node, it can specify that the QoS level and the event as subscribed are applied to all UEs managed by PCRF/PCF node, regardless of IP addresses of the UEs, and destination IP address(es) (e.g. *Netflix, Facebook,* etc.). Alternatively, a notification sent to AF node can include a UE IP address and/or a UE ID (UE identity or GPSI, e.g. MSISDN, External ID) to indicate the UE or the user that has run out his resources quota.

The invention is set out in the independent claims appended hereto. Optional features are set out in the dependent claims.

In one or more embodiments of the present disclosure, since no IP address is required for AF to indicate a IP flow to which a QoS policy is applied, it allows an application to declare the QoS policy for all subscribers (or a group of subscribers) without the knowledge on the IP address(es) allocated to the users. Additionally, critical information, e.g., the event of out of credit, is available for taking QoS control for a specific subscriber (or all subscribers) by AF node if declaring the notification of the event in a QoS request.

### BRIEF DESCRIPTION OF THE DRAWINGS

The foregoing and other objects, features, and advantages of the disclosure would be apparent from the following more particular description of preferred embodiments as illustrated in the accompanying drawings in which:
Figure 1 schematically illustrates a typical QoS control procedure in a scenario where a pre-paid service is provided by an AF.
Fig. 2 schematically illustrates a flowchart of a method for providing a pre-paid service in a cellular communication network according to one exemplary embodiment of the present disclosure.
Fig. 3 is a block diagram illustrating an apparatus for providing a pre-paid service in a cellular communication network according to another exemplary embodiment of the present disclosure.
Fig. 4 schematically illustrates a flowchart of a method for providing a pre-paid service in a cellular communication network according to one exemplary embodiment of the present disclosure.
Fig. 5 is a block diagram illustrating an apparatus for providing a pre-paid service in a cellular communication network according to another exemplary embodiment of the present disclosure.
Fig. 6 schematically illustrates a flowchart of a method for providing a pre-paid service in a cellular communication network according to one exemplary embodiment of the present disclosure.
Fig. 7 is a block diagram illustrating an apparatus for providing a pre-paid service in a cellular communication network according to another exemplary embodiment of the present disclosure.
Figure 8 schematically illustrates a QoS control procedure in a scenario where a pre-paid service is provided by an AF according to another exemplary embodiment of the present disclosure.
Figure 9 schematically illustrates a QoS control procedure in a scenario where a pre-paid service is provided by an AF according to another exemplary embodiment of the present disclosure.
Figure 10 schematically illustrates a QoS control procedure in a scenario where a pre-paid service is provided by an AF according to another exemplary embodiment of the present disclosure.

### DETAILED DESCRIPTION

The disclosure can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the disclosure may take, may be referred to as techniques. In general, the order of the steps of disclosed processes may be altered within the scope of the disclosure. Unless stated otherwise, a component such as a processor or a memory described as being configured to perform a task may be implemented as a general component that is temporarily configured to perform the task at a given time or a specific component that is manufactured to perform the task. As used herein, the term "processor" refers to one or more devices, circuits, and/or processing cores configured to process data, such as computer program instructions.

A detailed description of one or more embodiments of the disclosure is provided below along with accompanying figures that illustrate the principles of the disclosure. The disclosure is described in connection with such embodiments, but the disclosure is not limited to any embodiment. The scope of the disclosure is limited only by the claims and the disclosure encompasses numerous alternatives, modifications and equivalents. Numerous specific details are set forth in the following description in order to provide a thorough understanding of the disclosure. These details are provided for the purpose of example and the disclosure may be practiced according to the claims without some or all of these specific details. For the purpose of clarity, technical material that is known in the technical fields related to the disclosure has not been described in detail so that the disclosure is not unnecessarily obscured.

As used herein, the term "terminal device" may be referred to as, for example, device, access terminal, user equipment (UE), mobile station, mobile unit, subscriber station, or the like. It may refer to any end device that can access a wireless communication network and receive services therefrom. By way of example and not limitation, the terminal device may include a portable computer, an image capture terminal device such as a digital camera, a gaming terminal device, a music storage and playback appliance, a mobile phone, a cellular phone, a smart phone, a tablet, a wearable device, a personal digital assistant (PDA), or the like.

As used herein, the term "Exposure Function (EF)" refers to a functional entity for exposing network capabilities and events detected, e.g., by other network functions. The non-exclusive examples of the EF include Service Capability Exposure Function (SCEF) as defined under 3GPP TS23.682 or Network Exposure Function (NEF) as defined under 3GPP TS23.502.

In one or more embodiments of the present disclosure, by exposing a charging event, e.g., Out_of_Credit, to AFs via SCEF in EPC or NEF in 5GC, AFs can take some actions, e.g. downgrading the QoS level and pushing a notification on subscription to a relevant UE. Moreover, it allows AFs to subscribe to the charging event without indicating UE information or for all UEs in the QoS request. Furthermore, by centralizing all subscriptions /notifications to the charging event via SCEF/NEF, it makes the network operator possible to hide the 3GPP network topology to AFs, and thus AFs will not be impacted when the topology changes (e.g. a new PCRF/PCF instance is added to the network).

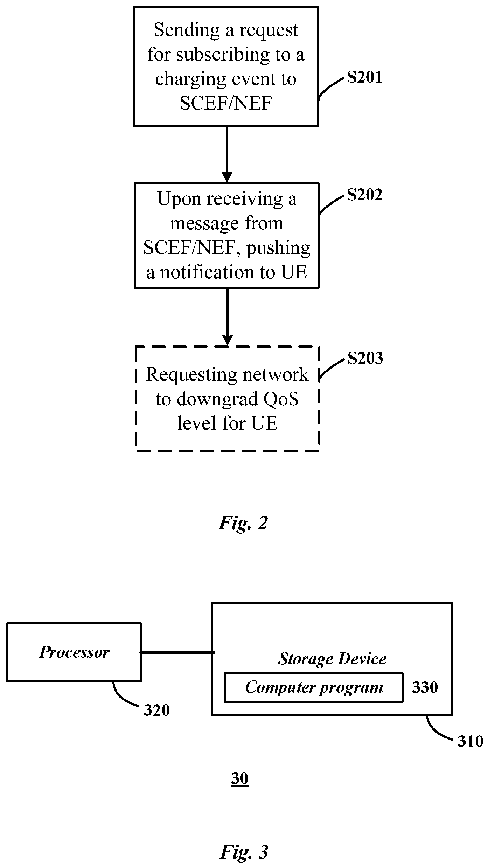

Fig. 2 schematically illustrates a flowchart of a method for providing a pre-paid service in a cellular communication network according to one exemplary embodiment of the present disclosure. For illustrative purpose, it assumes the method steps as shown in Fig. 2 are carried out at an AF node.

With reference to Fig. 2, at step S201, an AF node sends a request for subscribing to a charging event to a SCEF/NEF node, and thus the AF node will be notified of the occurrence of the event by SCEF/NEF node. As an example, if resources for one of a group of subscribers have run out, it determines that the charging event occurs. The resources herein can be measured in at least one item selected from a group consisting of storage volume, bandwidth, and time length.

Then, at step S202, in response to a message on occurrence of the event from the SCEF/NEF node, the AF node sending to a terminal device using the resources a notification that the resources have run out. As a response, the terminal device may take one or more actions, e.g., refilling the quota, changing the subscription terms and the like.

Alternatively, the request is a QoS request during an AF session, which includes: 1) an IP address indicator for defining all of the subscribers managed by a PCRF node or a PCF node as the group of subscribers; 2) an IP domain for defining a scope of IP flows; and 3) an event indicator for enabling the second node to notify the AF node of the event.

Alternatively, the request is an event exposure subscription request including: 1) an IP address indicator for defining all of the subscribers managed by the PCRF or PCF node as the group of subscribers; and 2) an event indicator for enabling the second node to notify the AF node of the event. The event exposure subscription request may further include an indicator for requiring an IP address of the terminal device in the message from the SCEF/NEF node.

Optionally, the process proceeds to step S203 where the AF node sends to the SCEF/NEF node another QoS request for downgrading the QoS level associated with the terminal device or subscriber as indicated in the message so that the PCRF or PCFnode will change the QoS level for the terminal device or subscriber as indicated.

Fig. 3 is a block diagram illustrating an apparatus for providing a pre-paid service in a cellular communication network according to another exemplary embodiment of the present disclosure.

With reference to Fig. 3, the apparatus 30 comprises a storage device 310 and a processor 320 coupled to the storage device 310. The storage device 310 is configured to store a computer program 330 comprising computer instructions. The processor 320 is configured to execute the computer instructions to perform some or all of the method steps as shown in Fig. 2.

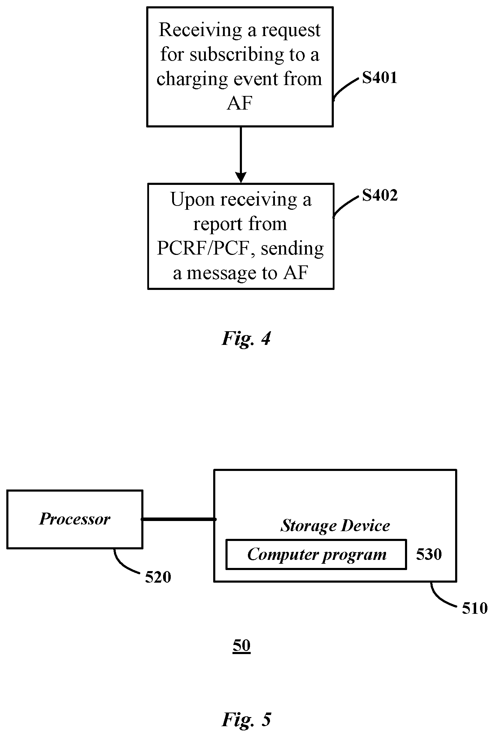

Fig. 4 schematically illustrates a flowchart of a method for providing a pre-paid service in a cellular communication network according to one exemplary embodiment of the present disclosure. For illustrative purpose, it assumes the method steps as shown in Fig. 4 are carried out at a SCEF/NEF node.

With reference to Fig. 4, at step S401, a SCEF/NEF node receives a request for subscribing to a charging event from an AF node. As an example, if resources for anyone of a group of subscribers managed by a PCRF/PCF node have run out, it determines that the charging event occurs. With this event subscription, the SCEF/NEF node will notify the AF node of the occurrence of the event.

Then, at step S402, in response to a report from the PCRF/PCF node that the charging event occurs, the SCEF/NEF node sends to the AF node a message indicating the occurrence of the event and a terminal device using the resources.

Alternatively, the request from the AF node is a QoS request during an AF session, which includes: 1) an IP address indicator for defining all of the subscribers managed by a PCRF node or a PCF node as the group of subscribers; 2) an IP domain for defining a scope of IP flows; and 3) an event indicator for enabling the second node to notify the AF node of the event.

Alternatively, the message is a HTTP notification including a terminal device ID for identifying the terminal device using the resources, an IP address for the terminal device using the resources and a flag indicating the occurrence of the event. The HTTP notification may further include an IP flow ID or a SDF flow ID for identifying the flows associated with the terminal device using the resources.

Alternatively, the request is an event exposure subscription request including: 1) an IP address indicator for defining all of the subscribers managed by the PCRF or PCF node as the group of subscribers; and 2) an event indicator for enabling the second node to notify the AF node of the event. The event exposure subscription request may further include an indicator for requiring an IP address of the terminal device in the message from the SCEF/NEF node.

Alternatively, the message is an event exposure notification including a terminal device ID for identifying the terminal device using the resources, an IP address for the terminal device using the resources and a flag indicating the occurrence of the event. The event exposure notification may further include an IP flow ID or a SDF flow ID for identifying the flows associated with the terminal device using the resources.

Fig. 5 is a block diagram illustrating an apparatus for providing a pre-paid service in a cellular communication network according to another exemplary embodiment of the present disclosure.

With reference to Fig. 5, the apparatus 50 comprises a storage device 510 and a processor 520 coupled to the storage device 510. The storage device 510 is configured to store a computer program 530 comprising computer instructions. The processor 520 is configured to execute the computer instructions to perform some or all of the method steps as shown in Fig. 4.

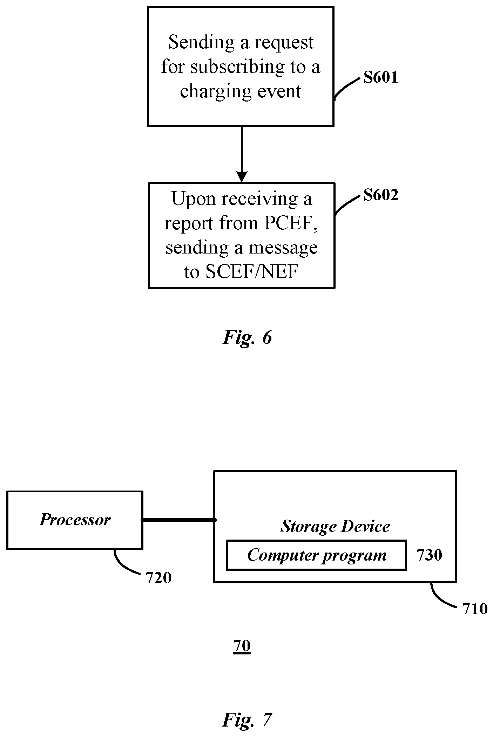

Fig. 6 schematically illustrates a flowchart of a method for providing a pre-paid service in a cellular communication network according to one exemplary embodiment of the present disclosure. For illustrative purpose, it assumes the method steps as shown in Fig. 6 are carried out at a PCRF/PCF node.

With reference to Fig. 6, at step S601, a PCRF/PCF node sends to a PCEF node (or SMF/UPF Network Functions in the 5G network) a request for subscribing to an event where resources for one of a group of subscribers managed by the PCRF/PCF node have run out.

Then, at step S602, in response to a report from the PCEF node (or SMF/UPF Network Functions in the 5G network) that the charging event occurs, the PCRF/PCF node sends to the SCEF/NEF node a message indicating the occurrence of the event and a terminal device using the resources.

Fig. 7 is a block diagram illustrating an apparatus for providing a pre-paid service in a cellular communication network according to another exemplary embodiment of the present disclosure.

With reference to Fig. 7, the apparatus 70 comprises a storage device 710 and a processor 720 coupled to the storage device 710. The storage device 710 is configured to store a computer program 730 comprising computer instructions. The processor 720 is configured to execute the computer instructions to perform some or all of the method steps as shown in Fig. 6.

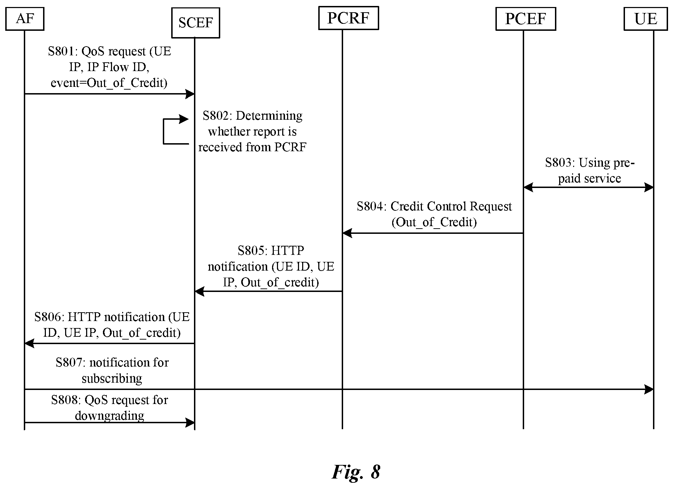

Figure 8 schematically illustrates a QoS control procedure in a scenario where a pre-paid service is provided by an AF according to another exemplary embodiment of the present disclosure. It shall be noted that although the QoS control procedure as shown in Figure 8 is described in 4G scenarios, it is also applicable to 5G scenarios by making some modifications. For example, the modification include but are not limited to replacing SCEF node by NEF node, and replacing PCRF node by PCF NETWORK FUNCTION node.

As shown in Fig. 8, the procedure comprises the following steps:
Step S801: AF node initiates an AF session by sending a QoS request including a UE IP address, e.g., "0.0.0.0", an IP flow ID, e.g., "All_Flows", and an event indicator, e.g., "Out_of_Credit". The address "0.0.0.0" herein indicates the subscription to the event as identified by the event indicator is applicable to all of the users managed by PCRF node, the IP flow ID indicates an IP domain with the scope of the IP flows, and "All_Flows" herein means the subscription is applicable to all of the destination IP addresses, and the event indicator indicates the type of event for subscription.
Step S802: Upon reception of the QoS request, SCEF node assumes PCRF node has a pre-configured QoS policy to notify SCEF of the "Out_of_Credit" event and thus determine whether a report on the "Out_of_Credit" event is received from PCRF node.
Step S803: When using the pre-paid service, data volume and time consumed by UE is counted by PCEF node (or SMF/UPF Network Functions in the 5G network).
Step S804: PCEF node (or SMF/UPF Network Functions in the 5G network) determines that a user subscribing to the pre-paid service has fulfilled the quota and sends to PCRF node a Credit Control Request indicating the occurrence of the "Out_of_Credit" event.
Step S805: PCRF node creates a HTTP notification on the basis of the Credit Control Request from PCEF node (or SMF/UPF Network Functions in the 5G network) and sends the HTTP notification to SCEF. In the HTTP notification, an IP address and ID for the terminal device associated the "Out_of_Credit" event are included.
Step S806: In response to the notification from PCRF node, SCEF node creates a HTTP notification including an IP address and ID for the terminal device associated the "Out_of_Credit" event and a flag indicating the occurrence of the event are contained therein, and sends the created HTTP notification to AF node.
Step S807: In response to the notification from SCEF node, AF node creates a notification that the resources, e.g., data volume, have run out, and pushes the notification to UE.
Step S808: AF node sends to SCEF node a QoS request for downgrading a QoS level for UE.

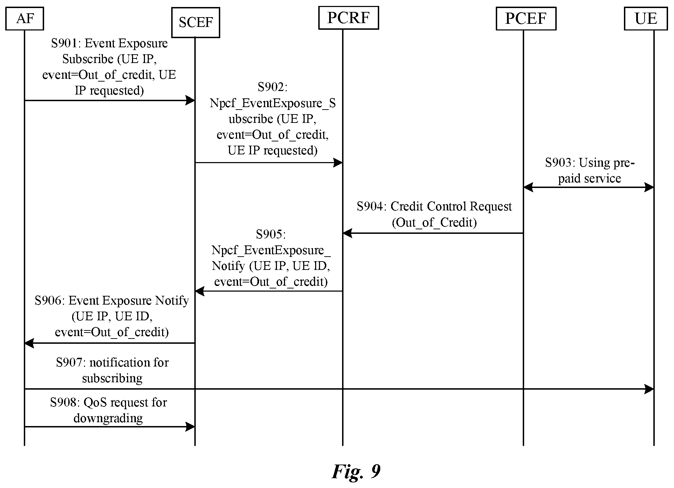

Figure 9 schematically illustrates a QoS control procedure in a scenario where a pre-paid service is provided by an AF according to another exemplary embodiment of the present disclosure. It shall be noted that although the QoS control procedure as shown in Figure 9 is described in 4G scenarios, it is also applicable to 5G scenarios by making some modifications. For example, the modification include but are not limited to replacing SCEF node by NEF node, and replacing PCRF node by PCF NETWORK FUNCTION node.

As shown in Fig. 9, the procedure comprises the following steps:
Step S901: AF node sends to SCEF node an event exposure subscribe request including a UE IP address, e.g., "0.0.0.0", an event indicator, e.g., "Out_of_Credit", and an indicator for requiring the IP address of the terminal device involved in the event as identified by the event indicator shall be included in a notification on the occurrence of the event. The address "0.0.0.0" herein indicates the subscription to the event as identified by the event indicator is applicable all of the users managed by PCRF node, and the event indicator indicates the type of event for subscription. In the present embodiment, the event exposure subscribe request may be a Event Exposure Subscribe message.
Step S902: In response to the event exposure subscribe request, SCEF node sends an event subscribe request indicating it applies to all UEs (identification of any UE is accomplished by omitting "groupId" attribute)an event indicator, e.g., "Out_of_Credit" and an indicator for requiring the IP address of the terminal device, to PCRF node. In the present embodiment, the event subscribe request may be a Npcf_EventExposure_Subscribe message as defined in 3GPP TS 29.523.
Step S903: When using the pre-paid service, data volume and time consumed by UE is counted by PCEF node (or SMF/UPF Network Functions in the 5G network).
Step S904: PCEF node (or SMF/UPF Network Functions in the 5G network) determines that a user subscribing to the pre-paid service has fulfilled the quota and sends to PCRF node a Credit Control Request indicating the occurrence of the "Out_of_Credit" event.
Step 905: PCRF node creates an event notification on the basis of the Credit Control Request from PCEF node (or SMF/UPF Network Functions in the 5G network) and sends the notification to SCEF node. The event notification includes an IP address and ID for the terminal device associated the "Out_of_Credit" event. In the present embodiment,, the event notification may be a Npcf_EventExposure_Notify message as defined in 3GPP TS 29.523.
Step S906: In response to the notification from PCRF node, SCEF node creates an event exposure notification including an IP address and ID for the terminal device associated the "Out_of_Credit" event and a flag indicating the occurrence of the event, and sends the created message to AF node. In the present embodiment, the event exposure notification may be a Event Exposure Notify message.
Step S907: In response to the notification from SCEF node, AF node creates a notification that the resources, e.g., data volume, have run out, and pushes the notification to UE.
Step S908: AF node sends to SCEF node a QoS request for downgrading a QoS level for UE.

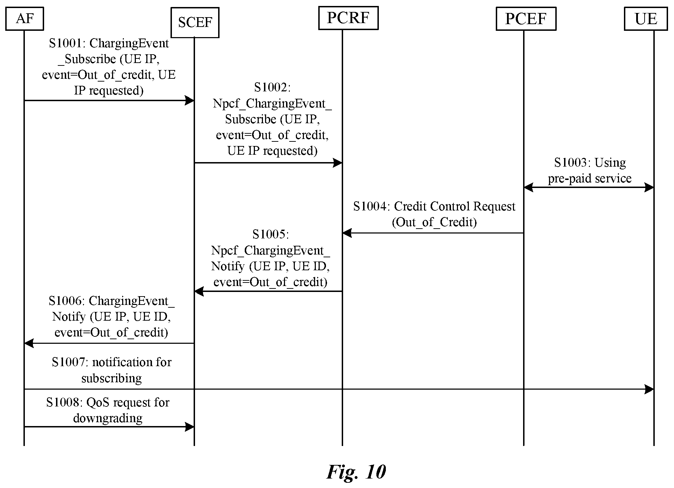

Figure 10 schematically illustrates a QoS control procedure in a scenario where a pre-paid service is provided by an AF according to another exemplary embodiment of the present disclosure. It shall be noted that although the QoS control procedure as shown in Figure 9 is described in 4G scenarios, it is also applicable to 5G scenarios by making some modifications. For example, the modification include but are not limited to replacing SCEF node by NEF node, and replacing PCRF node by PCF NETWORK FUNCTION node.

As shown in Fig. 10, the procedure comprises the following steps:
Step S1001: AF node sends to SCEF node an event exposure subscribe request including a UE IP address, e.g., "0.0.0.0", an event indicator, e.g., "Out_of_Credit", and an indicator for requiring the IP address of the terminal device involved in the event as identified by the event indicator shall be included in a notification on the occurrence of the event. The address "0.0.0.0" herein indicates the subscription to the event as identified by the event indicator is applicable all of the users managed by PCRF node, and the event indicator indicates the type of event for subscription. In the present embodiment, the event exposure subscribe request may be a ChargingEvent_Subscribe message, which may be defined in future 3GPP TS.
Step S1002: In response to the event exposure subscribe request, SCEF node sends an event subscribe request including a UE IP address, e.g., "0.0.0.0" or alternatively an "Any UE" indicator, an event indicator, e.g., "Out_of_Credit" and an indicator for requiring the IP address of the terminal device, to PCRF node. In the present embodiment, the event subscribe request may be a Npcf_ChargingEvent_Subscribe message, which may be defined in future 3GPP TS.
Step S1003: When using the pre-paid service, data volume and time consumed by UE is counted by PCEF node (or SMF/UPF Network Functions in the 5G network).
Step S1004: PCEF node (or SMF/UPF Network Functions in the 5G network) determines that a user subscribing to the pre-paid service has fulfilled the quota and sends to PCRF node a Credit Control Request indicating the occurrence of the "Out_of_Credit" event.
Step 1005: PCRF node creates an event notification on the basis of the Credit Control Request from PCEF node (or SMF/UPF Network Functions in the 5G network) and sends the notification to SCEF node. The event notification includes an IP address and ID for the terminal device associated the "Out_of_Credit" event. In the present embodiment, the event notification may be a Npcf_ChargingEvent_Notify message, which may be defined in future 3GPP TS.
Step S1006: In response to the notification from PCRF node, SCEF node creates an event exposure notification including an IP address and ID for the terminal device associated the "Out_of_Credit" event and a flag indicating the occurrence of the event, and sends the created message to AF node. In the present embodiment, the event exposure Notification may be a ChargingEvent_Notify message, which may be defined in future 3GPP TS.
Step S1007: In response to the notification from SCEF node, AF node creates a notification for subscribing the resource, e.g., data volume, and pushes the notification to UE.
Step S1008: AF node sends to SCEF node a QoS request for downgrading a QoS level for UE.

It should be noted that the aforesaid embodiments are illustrative of this disclosure instead of restricting this disclosure, substitute embodiments may be designed by those skilled in the art without departing from the scope of the claims enclosed. The wordings such as "include", "including", "comprise" and "comprising" do not exclude elements or steps which are present but not listed in the description and the claims. It also shall be noted that as used herein and in the appended claims, the singular forms "a", "an", and "the" include plural referents unless the context clearly dictates otherwise. This disclosure can be achieved by means of hardware including several different elements or by means of a suitably programmed computer. In the unit claims that list several means, several ones among these means can be specifically embodied in the same hardware item. The use of such words as first, second, third does not represent any order, which can be simply explained as names. While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method for providing a pre-paid service in a cellular communication network, the method being **characterized by** comprising the following steps carried out at a first node:
sending (S201) to a second node a request for subscribing to a charging event where resources for any one of a group of subscribers have run out; and
in response to a message on occurrence of the charging event from the second node, sending (S202) to a terminal device using the resources a notification that the resources have run out;
wherein the first node is a node for application function, AF, and the second node is a node for exposing network capabilities and events, and
wherein the resources are measured in at least one item selected from a group consisting of storage volume, bandwidth, and time length.

2. The method according to claim 1, further comprising:
sending to the second node a quality of service, QoS, request for downgrading a QoS level for the one of the group of subscribers.

3. The method according to claim 1, wherein the request is a quality of service, QoS, request during an AF session, and the QoS request includes an internet protocol, IP, address indicator for defining all of the subscribers managed by a third node as the group of subscribers, an IP domain for defining a scope of IP flows and an event indicator for enabling the second node to notify the first node of the charging event, the third node is a node for Policy and Charging Rules Function, PCRF, or Policy Control Function, PCF.

4. The method according to claim 1, wherein the request is an event exposure subscription request including an internet protocol, IP, address indicator for defining all of the subscribers managed by a third node as the group of subscribers and an event indicator for enabling the second node to notify the first node of the charging event, the third node is a node for policy and charging rules function, PCRF, or policy control function, PCF.

5. An apparatus (30) for providing a pre-paid service in a cellular communication network, the apparatus being **characterized by** comprising:
a storage device (310) configured to store a computer program comprising computer instructions; and
a processor (320) coupled to the storage device and configured to execute the computer instructions to perform the method according to any one of the preceding claims.

6. A method for providing a pre-paid service in a cellular communication network, the method being **characterized by** comprising the following steps carried out at a second node:
receiving (S401) from a first node a request for subscribing to a charging event where resources for any one of a group of subscribers have run out, the group of subscribers being managed by a third node; and
in response to reporting occurrence of the charging event by the third node, sending (S402) to the first node a message indicating the occurrence of the charging event and a terminal device using the resources,
wherein the second node is a node for exposing network capabilities and events, the first node is a node for application function, AF, and the third node is a node for policy and charging rules function, PCRF, or policy control function, PCF, and
wherein the resources are measured in at least one item selected from a group consisting of storage volume, bandwidth, and time length.

7. The method according to claim 6, wherein the request is a quality of service. QoS, request during an AF session, and the QoS request includes an internet protocol, IP, address indicator for defining all of the subscribers managed by the third node as the group of subscribers, an IP domain for defining a scope of IP flows and an event indicator for enabling the second node to notify the first node of the charging event.

8. The method according to claim 7, wherein the message is a hypertext transfer protocol, HTTP, notification including a terminal device identifier, ID, for identifying the terminal device using the resources, an IP address for the terminal device using the resources and a flag indicating the occurrence of the charging event.

9. The method according to claim 6, wherein the request is an event exposure subscription request including an internet protocol ,IP, address indicator for defining all of the subscribers managed by the third node as the group of subscribers and an event indicator for enabling the second node to notify the first node of the charging event.

10. An apparatus (50) for providing a pre-paid service in a cellular communication network, the apparatus being **characterized by** comprising:
a storage device (510) configured to store a computer program comprising computer instructions; and
a processor (520) coupled to the storage device and configured to execute the computer instructions to perform the method according to any one of claims 6 to 9.

11. A method for providing a pre-paid service in a cellular communication network, the method being **characterized by** comprising the following steps carried out at a third node:
sending (S601) to a fourth node a request for subscribing to a charging event where resources for any one of a group of subscribers have run out, the group of subscribers being managed by the third node;
in response to reporting occurrence of the charging event by the fourth node, sending (S602) to a second node a message indicating the occurrence of the charging event and a terminal device using the resources,
wherein the third node is a node for policy and charging rules function, PCRF, or policy control function, PCF, the fourth node is a node for Policy and Charging Enforcement Function, PCEF, or Session Management Function, SMF, and the second node is a node for exposing network capabilities and events, and
wherein the resources are measured in at least one item selected from a group consisting of storage volume, bandwidth, and time length.

12. The method according to claim 11, wherein the message is a hypertext transfer protocol, HTTP, notification including a terminal device identifier, ID, for identifying the terminal device using the resources, an internet protocol, IP, address for the terminal device using the resources and a flag indicating the occurrence of the charging event.

13. The method according to claim 11, wherein the message is an event exposure notification including a terminal device identifier, ID, for identifying the terminal device using the resources, an internet protocol, IP, address for the terminal device using the resources and a flag indicating the occurrence of the charging event.

14. The method according to any one of claims 1 to 4, 6 to 9 and 11 to 13, wherein the second node is a node for Service Capability Exposure function, SCEF, or Network Exposure Function, NEF.

15. An apparatus (70) for providing a pre-paid service in a cellular communication network, the apparatus being **characterized by** comprising:
a storage device (710) configured to store a computer program comprising computer instructions; and
a processor (720) coupled to the storage device and configured to execute the computer instructions to perform the method according to any one of claims 11 to 14.

## Patentansprüche

1. Verfahren zur Bereitstellung eines vorausbezahlten Dienstes in einem zellularen Kommunikationsnetzwerk, wobei das Verfahren **dadurch gekennzeichnet ist, dass** es die folgenden Schritte umfasst, die an einem ersten Knoten ausgeführt werden:
Senden (S201) einer Anforderung zum Abonnieren eines Abrechnungsereignisses an einen zweiten Knoten, wenn Ressourcen für einen aus einer Gruppe von Teilnehmern aufgebraucht sind; und
in Reaktion auf eine Nachricht über das Eintreten des Abrechnungsergebnisses von dem zweiten Knoten Senden (S202) einer Benachrichtigung, dass die Ressourcen aufgebraucht sind, an eine Endgerätevorrichtung, die die Ressourcen verwendet;
wobei der erste Knoten ein Knoten mit Anwendungsfunktion, AF, ist und der zweite Knoten ein Knoten zum Darlegen von Netzwerkfähigkeiten und - ereignissen ist, und
wobei die Ressourcen anhand mindestens eines Elements gemessen werden, das aus einer Gruppe ausgewählt wird, die aus Speichervolumen, Bandbreite und Zeitdauer besteht.

2. Verfahren nach Anspruch 1, ferner umfassend:
Senden einer Dienstqualitätsanforderung, QoS-Anforderung, zum Herabsetzen einer QoS-Stufe für den einen aus der Gruppe von Teilnehmern an den zweiten Knoten.

3. Verfahren nach Anspruch 1, wobei die Anforderung eine Dienstqualitätsanforderung, QoS-Anforderung, während einer AF-Sitzung ist und die QoS-Anforderung einen Internetprotokoll-Adressindikator, IP-Adressindikator, um alle Teilnehmer, die von einem dritten Knoten verwaltet werden, als die Gruppe von Teilnehmern zu definieren, eine IP-Domäne, um einen Bereich von IP-Flüssen zu definieren, und einen Ereignisindikator umfasst, um dem zweiten Knoten zu ermöglichen, den ersten Knoten über das Abrechnungsereignis zu benachrichtigen, wobei der dritte Knoten ein Knoten mit Richtlinien- und Abrechnungsregelfunktion, PCRF, oder Richtlinienkontrollfunktion, PCF, ist.

4. Verfahren nach Anspruch 1, wobei die Anforderung eine Ereignisdarlegungsabonnementanforderung ist, die einen Internetprotokoll-Adressindikator, IP-Adressindikator, um alle Teilnehmer, die von einem dritten Knoten verwaltet werden, als die Gruppe von Teilnehmern zu definieren, und einen Ereignisindikator umfasst, um dem zweiten Knoten zu ermöglichen, den ersten Knoten über das Abrechnungsereignis zu benachrichtigen, wobei der dritte Knoten ein Knoten mit Richtlinien- und Abrechnungsregelfunktion, PCRF, oder Richtlinienkontrollfunktion, PCF, ist.

5. Einrichtung (30) zum Bereitstellen eines vorausbezahlten Dienstes in einem zellularen Kommunikationsnetzwerk, wobei die Einrichtung **dadurch gekennzeichnet ist, dass** sie Folgendes umfasst:
eine Speichervorrichtung (310), die dazu konfiguriert ist, ein Computerprogramm zu speichern, das Computeranweisungen umfasst; und
einen Prozessor (320), der mit der Speichervorrichtung gekoppelt und dazu konfiguriert ist, die Computeranweisungen auszuführen, um das Verfahren nach einem der vorhergehenden Ansprüche durchzuführen.

6. Verfahren zur Bereitstellung eines vorausbezahlten Dienstes in einem zellularen Kommunikationsnetzwerk, wobei das Verfahren **dadurch gekennzeichnet ist, dass** es die folgenden Schritte umfasst, die an einem zweiten Knoten ausgeführt werden:
Empfangen (S401) einer Anforderung zum Abonnieren eines Abrechnungsereignisses von einem ersten Knoten, wenn Ressourcen für einen aus einer Gruppe von Teilnehmern aufgebraucht sind, wobei die Gruppe von Teilnehmern von einem dritten Knoten verwaltet wird; und
in Reaktion auf das Melden des Eintretens des Abrechnungsereignisses durch den dritten Knoten Senden (S402) einer Nachricht, die das Eintreten des Abrechnungsereignis anzeigt, an den ersten Knoten und eine Endgerätevorrichtung, die die Ressourcen verwendet,
wobei der zweite Knoten ein Knoten zum Darlegen von Netzwerkfähigkeiten und -ereignissen ist, der erste Knoten ein Knoten mit Anwendungsfunktion, AF, ist und der dritte Knoten ein Knoten mit Richtlinien- und Abrechnungsregelfunktion, PCRF, oder Richtlinienkontrollfunktion, PCF, ist, und
wobei die Ressourcen anhand mindestens eines Elements gemessen werden, das aus einer Gruppe ausgewählt wird, die aus Speichervolumen, Bandbreite und Zeitdauer besteht.

7. Verfahren nach Anspruch 6, wobei die Anforderung eine Dienstqualitätsanforderung, QoS-Anforderung, während einer AF-Sitzung ist und die QoS-Anforderung einen Internetprotokoll-Adressindikator, IP-Adressindikator, um alle Teilnehmer, die von dem dritten Knoten verwaltet werden, als die Gruppe von Teilnehmern zu definieren, eine IP-Domäne, um einen Bereich von IP-Flüssen zu definieren, und einen Ereignisindikator umfasst, um dem zweiten Knoten zu ermöglichen, den ersten Knoten über das Abrechnungsereignis zu benachrichtigen.

8. Verfahren nach Anspruch 7, wobei die Nachricht eine Hypertext Transfer Protocol-Benachrichtigung, HTTP-Benachrichtigung, ist, die eine Endgerätevorrichtungskennung, Endgerätevorrichtungs-ID, um die Endgerätevorrichtung zu identifizieren, die die Ressourcen verwendet, eine IP-Adresse für die Endgerätevorrichtung, die die Ressourcen verwendet, und ein Flag umfasst, das das Eintreten des Abrechnungsereignisses anzeigt.

9. Verfahren nach Anspruch 6, wobei die Anforderung eine Ereignisdarlegungsabonnementanforderung ist, die einen Internetprotokoll-Adressindikator, IP-Adressindikator, um alle Teilnehmer, die von dem dritten Knoten verwaltet werden, als die Gruppe von Teilnehmern zu definieren, und einen Ereignisindikator umfasst, um dem zweiten Knoten zu ermöglichen, den ersten Knoten über das Abrechnungsereignis zu benachrichtigen.

10. Einrichtung (50) zum Bereitstellen eines vorausbezahlten Dienstes in einem zellularen Kommunikationsnetzwerk, wobei die Einrichtung **dadurch gekennzeichnet ist, dass** sie Folgendes umfasst:
eine Speichervorrichtung (510), die dazu konfiguriert ist, ein Computerprogramm zu speichern, das Computeranweisungen umfasst; und
einen Prozessor (520), der mit der Speichervorrichtung gekoppelt und dazu konfiguriert ist, die Computeranweisungen auszuführen, um das Verfahren nach einem der Ansprüche 6 bis 9 durchzuführen.

11. Verfahren zur Bereitstellung eines vorausbezahlten Dienstes in einem zellularen Kommunikationsnetzwerk, wobei das Verfahren **dadurch gekennzeichnet ist, dass** es die folgenden Schritte umfasst, die an einem dritten Knoten ausgeführt werden:
Senden (S601) einer Anforderung zum Abonnieren eines Abrechnungsereignisses an einen vierten Knoten, wenn Ressourcen für einen aus einer Gruppe von Teilnehmern aufgebraucht sind, wobei die Gruppe von Teilnehmern von dem dritten Knoten verwaltet wird;
in Reaktion auf das Melden des Eintretens des Abrechnungsereignisses durch den vierten Knoten Senden (S602) einer Nachricht, die das Eintreten des Abrechnungsereignis anzeigt, an einen zweiten Knoten und eine Endgerätevorrichtung, die die Ressourcen verwendet,
wobei der dritte Knoten ein Knoten mit Richtlinien- und Abrechnungsregelfunktion, PCRF, oder Richtlinienkontrollfunktion, PCF, ist, der vierte Knoten ein Knoten mit Richtlinien- und Abrechnungsdurchsetzungsfunktion, PCRF, oder Sitzungsverwaltungsfunktion, PCF, ist und der zweite Knoten ein Knoten zum Darlegen von Netzwerkfähigkeiten und -ereignissen ist, und
wobei die Ressourcen anhand mindestens eines Elements gemessen werden, das aus einer Gruppe ausgewählt wird, die aus Speichervolumen, Bandbreite und Zeitdauer besteht.

12. Verfahren nach Anspruch 11, wobei die Nachricht eine Hypertext Transfer Protocol-Benachrichtigung, HTTP-Benachrichtigung, ist, die eine Endgerätevorrichtungskennung, Endgerätevorrichtungs-ID, um die Endgerätevorrichtung zu identifizieren, die die Ressourcen verwendet, eine Internetprotokoll-Adresse, IP-Adresse, für die Endgerätevorrichtung, die die Ressourcen verwendet, und ein Flag umfasst, das das Eintreten des Abrechnungsereignisses anzeigt.

13. Verfahren nach Anspruch 11, wobei die Nachricht eine Ereignisdarlegungsbenachrichtigung ist, die eine Endgerätevorrichtungskennung, Endgerätevorrichtungs-ID, um die Endgerätevorrichtung zu identifizieren, die die Ressourcen verwendet, eine Internetprotokoll-Adresse, IP-Adresse, für die Endgerätevorrichtung, die die Ressourcen verwendet, und ein Flag umfasst, das das Eintreten des Abrechnungsereignisses anzeigt.

14. Verfahren nach einem der Ansprüche 1 bis 4, 6 bis 9 und 11 bis 13, wobei der zweite Knoten ein Knoten mit Dienstfähigkeitsdarlegungsfunktion, SCEF, oder Netzwerkdarlegungsfunktion, NEF, ist.

15. Einrichtung (70) zum Bereitstellen eines vorausbezahlten Dienstes in einem zellularen Kommunikationsnetzwerk, wobei die Einrichtung **dadurch gekennzeichnet ist, dass** sie Folgendes umfasst:
eine Speichervorrichtung (710), die dazu konfiguriert ist, ein Computerprogramm zu speichern, das Computeranweisungen umfasst; und
einen Prozessor (720), der mit der Speichervorrichtung gekoppelt und dazu konfiguriert ist, die Computeranweisungen auszuführen, um das Verfahren nach einem der Ansprüche 11 bis 14 durchzuführen.

## Revendications

1. Procédé pour fournir un service prépayé dans un réseau de communication cellulaire, le procédé étant **caractérisé en ce qu'**il comprend les étapes suivantes réalisées au niveau d'un premier nœud :
l'envoi (S201), à un deuxième nœud, d'une demande d'abonnement à un événement de facturation où des ressources pour l'un quelconque d'un groupe d'abonnés sont épuisées ; et
en réponse à un message de survenance de l'événement de facturation depuis le deuxième nœud, l'envoi (S202), à un dispositif terminal utilisant les ressources, d'une notification que les ressources sont épuisées ;
dans lequel le premier nœud est un nœud de fonction d'application, AF, et le deuxième nœud est un nœud d'exposition de capacités de réseau et d'événements, et
dans lequel les ressources sont mesurées dans au moins un élément sélectionné parmi un groupe se composant d'un volume de stockage, d'une bande passante et d'une durée.

2. Procédé selon la revendication 1, comprenant en outre :
l'envoi, au deuxième nœud, d'une demande de qualité de service, QoS, pour réduire un niveau de QoS pour l'un du groupe d'abonnés.

3. Procédé selon la revendication 1, dans lequel la demande est une demande de qualité de service, QoS, au cours d'une session AF, et la demande de QoS inclut un indicateur d'adresse de protocole Internet, IP, pour définir tous les abonnés gérés par un troisième nœud en tant que le groupe d'abonnés, un domaine IP pour définir un périmètre de flux IP et un indicateur d'événement pour permettre au deuxième nœud de notifier le premier nœud de l'événement de facturation, le troisième nœud est un nœud de fonction de règles de politique et de facturation, PCRF, ou de fonction de commande de politique, PCF.

4. Procédé selon la revendication 1, dans lequel la demande est une demande d'abonnement d'exposition d'événement incluant un indicateur d'adresse de protocole Internet, IP, pour définir tous les abonnés gérés par un troisième nœud en tant que le groupe d'abonnés et un indicateur d'événement pour permettre au deuxième nœud de notifier le premier nœud de l'événement de facturation, le troisième nœud est un nœud de fonction de règles de politique et de facturation, PCRF, ou de fonction de commande de politique, PCF.

5. Appareil (30) pour fournir un service prépayé dans un réseau de communication cellulaire, l'appareil étant **caractérisé en ce qu'**il comprend :
un dispositif de stockage (310) configuré pour stocker un programme informatique comprenant des instructions informatiques ; et
un processeur (320) couplé au dispositif de stockage et configuré pour exécuter les instructions informatiques pour réaliser le procédé selon l'une quelconque des revendications précédentes.

6. Procédé pour fournir un service prépayé dans un réseau de communication cellulaire, le procédé étant **caractérisé en ce qu'**il comprend les étapes suivantes réalisées au niveau d'un deuxième nœud :
la réception (S401), depuis un premier nœud, d'une demande d'abonnement à un événement de facturation où des ressources pour l'un quelconque d'un groupe d'abonnés sont épuisées, le groupe d'abonnés étant géré par un troisième nœud ; et
en réponse à un signalement de survenance de l'événement de facturation par le troisième nœud, l'envoi (S402), au premier nœud, d'un message indiquant la survenance de l'événement de facturation et un dispositif terminal utilisant les ressources,
dans lequel le deuxième nœud est un nœud d'exposition de capacités de réseau et d'événements, le premier nœud est un nœud de fonction d'application, AF, et le troisième nœud est un nœud de fonction de règles de politique et de facturation, PCRF, ou de fonction de commande de politique, PCF, et
dans lequel les ressources sont mesurées dans au moins un élément sélectionné parmi un groupe se composant d'un volume de stockage, d'une bande passante et d'une durée.

7. Procédé selon la revendication 6, dans lequel la demande est une demande de qualité de service, QoS, au cours d'une session AF, et la demande de QoS inclut un indicateur d'adresse de protocole Internet, IP, pour définir tous les abonnés gérés par le troisième nœud en tant que le groupe d'abonnés, un domaine IP pour définir un périmètre de flux IP et un indicateur d'événement pour permettre au deuxième nœud de notifier le premier nœud de l'événement de facturation.

8. Procédé selon la revendication 7, dans lequel le message est une notification de protocole de transfert hypertexte, HTTP, incluant un identifiant, ID, de dispositif terminal pour identifier le dispositif terminal utilisant les ressources, une adresse IP pour le dispositif terminal utilisant les ressources et un drapeau indiquant la survenance de l'événement de facturation.

9. Procédé selon la revendication 6, dans lequel la demande est une demande d'abonnement d'exposition d'événement incluant un indicateur d'adresse de protocole Internet, IP, pour définir tous les abonnés gérés par le troisième nœud en tant que le groupe d'abonnés et un indicateur d'événement pour permettre au deuxième nœud de notifier le premier nœud de l'événement de facturation.

10. Appareil (50) pour fournir un service prépayé dans un réseau de communication cellulaire, l'appareil étant **caractérisé en ce qu'**il comprend :
un dispositif de stockage (510) configuré pour stocker un programme informatique comprenant des instructions informatiques ; et
un processeur (520) couplé au dispositif de stockage et configuré pour exécuter les instructions informatiques pour réaliser le procédé selon l'une quelconque des revendications 6 à 9.

11. Procédé pour fournir un service prépayé dans un réseau de communication cellulaire, le procédé étant **caractérisé en ce qu'**il comprend les étapes suivantes réalisées au niveau d'un troisième nœud :
l'envoi (S601), à un quatrième nœud, d'une demande d'abonnement à un événement de facturation où des ressources pour l'un quelconque d'un groupe d'abonnés sont épuisées, le groupe d'abonnés étant géré par le troisième nœud ;
en réponse à un signalement de survenance de l'événement de facturation par le quatrième nœud, l'envoi (S602), à un deuxième nœud, d'un message indiquant la survenance de l'événement de facturation et un dispositif terminal utilisant les ressources,
dans lequel le troisième nœud est un nœud de fonction de règles de politique et de facturation, PCRF, ou de fonction de commande de politique, PCF, le quatrième nœud est un nœud de fonction d'application de politique et de facturation, PCEF, ou de fonction de gestion de session, SMF, et le deuxième nœud est un nœud d'exposition de capacités de réseau et d'événements, et dans lequel les ressources sont mesurées dans au moins un élément sélectionné parmi un groupe se composant d'un volume de stockage, d'une bande passante et d'une durée.

12. Procédé selon la revendication 11, dans lequel le message est une notification de protocole de transfert hypertexte, HTTP, incluant un identifiant, ID, de dispositif terminal pour identifier le dispositif terminal utilisant les ressources, une adresse de protocole Internet, IP, pour le dispositif terminal utilisant les ressources et un drapeau indiquant la survenance de l'événement de facturation.

13. Procédé selon la revendication 11, dans lequel le message est une notification d'exposition d'événement incluant un identifiant, ID, de dispositif terminal pour identifier le dispositif terminal utilisant les ressources, une adresse de protocole Internet, IP, pour le dispositif terminal utilisant les ressources et un drapeau indiquant la survenance de l'événement de facturation.

14. Procédé selon l'une quelconque des revendications 1 à 4, 6 à 9 et 11 à 13, dans lequel le deuxième nœud est un nœud de fonction d'exposition de capacités de service, SCEF, ou de fonction d'exposition de réseau, NEF.

15. Appareil (70) pour fournir un service prépayé dans un réseau de communication cellulaire, l'appareil étant **caractérisé en ce qu'**il comprend :
un dispositif de stockage (710) configuré pour stocker un programme informatique comprenant des instructions informatiques ; et
un processeur (720) couplé au dispositif de stockage et configuré pour exécuter les instructions informatiques pour réaliser le procédé selon l'une quelconque des revendications 11 à 14.
